# EUROPÄISCHE PATENTSCHRIFT

(11) **EP 3 166 816 B1**
(45) Veröffentlichungstag und Bekanntmachung des Hinweises auf die Patenterteilung: **19.02.2020**
(21) Anmeldenummer: 15734208.0
(22) Anmeldetag: 08.07.2015
(51) Int. Cl.: B60N 2/90

(54) **MASSAGEEINHEIT FÜR EIN SITZTEIL UND/ODER LEHNENTEIL EINES SITZES**
MASSAGE DEVICE FOR A SEAT-PART AND/OR BACKREST OF A SEAT
APPAREIL DE MASSAGE POUR UN ASSISE ET/OU DOSSIER D'UN SIÈGE

(30) Priorität: 09.07.2014 DE 102014213299
(43) Veröffentlichungstag der Anmeldung: 17.05.2017
(73) Patentinhaber: Volkswagen Aktiengesellschaft, 38440 Wolfsburg (DE)
(72) Erfinder: SZLAG, Robert, 38440 Wolfsburg (DE); ALBRECHT, Björn, 38527 Meine (DE)
(86) Internationale Anmeldenummer: PCT/EP2015/065563
(87) Internationale Veröffentlichungsnummer: WO 2016/005431

(56) Entgegenhaltungen:
- DE-A1-102009 022 955
- DE-A1-102010 055 955

## Beschreibung

Die Erfindung betrifft eine Massageeinheit für ein Sitz- und/oder Lehnenteil eines Sitzes bestehend aus einem steuerbaren Elektromotor und aus einem durch den Elektromotor antreibbaren und zur Durchführung einer Massagebewegung in Richtung eines Sitzbenutzers translatorisch verfahrbaren Massagekopf.

Aus der DE 10 2009 022 955 A1 ist bereits eine aus einem Elektromotor und einem Massagekopf bestehende Massageeinheit der genannten Art bekannt. Der Massagekopf kann zur Durchführung einer Druckpunktmassage durch den Elektromotor in Richtung eines Sitzbenutzers translatorisch verfahren werden. Hierzu ist der Massagekopf unter Zwischenschaltung einer Antriebsspindel, eines Schneckenrades mit einer Hohlwelle und einer Antriebsschnecke mit dem Elektromotor gekoppelt. Der Massagekopf ist mit der Antriebsspindel verbunden, welche in der Hohlwelle des Schneckenrades aufgenommen ist. Das Schneckenrad ist durch die Antriebsschnecke gesteuert drehangetrieben, wobei die Antriebsschnecke auf einer Abtriebswelle des steuerbaren Elektromotors angeordnet ist. Durch eine Verzahnung zwischen Antriebsschnecke und Schneckenrad und eine weitere Verzahnung zwischen der Hohlwelle des Schneckenrades und der Antriebsspindel wird eine Drehbewegung der Antriebsschnecke in eine Translationsbewegung des Massagekopfes umgewandelt. Hierbei sind die Drehachse der Antriebsschnecke bzw. des Elektromotors und die Translationsachse des Massagekopfes orthogonal zueinander angeordnet. Durch die Massageeinheit wird eine Druckpunktmassage durchgeführt, bei welcher durch den Massagekopf ein Druck auf die Muskeln und Gelenke des Sitzbenutzers über einen längeren Zeitraum aufrechterhalten wird. Eine Vibrationsmassage soll mittels der Vorrichtung ausdrücklich nicht durchgeführt werden, da diese als störend angesehen wird.

In der US 4,005,703 A ist ein Vibrationstherapiekissen für einen Sitz offenbart. Hierbei wird eine Vibration eines Massagekopfes durch wechselnde elektromagnetische Felder erzeugt. Eine Druckpunktmassage ist bei dieser Vorrichtung weder vorgesehen noch möglich.

Vor diesem Hintergrund liegt der Erfindung die Aufgabe zugrunde, eine prozesssichere, aus wenigen Bauteilen bestehende und kompakt aufgebaute Massageeinheit für ein Sitz- oder Lehnenteil eines Sitzes zur Verfügung zu stellen.

Diese Aufgabe wird gelöst mit einer Massageeinheit gemäß den Merkmalen des Patentanspruches 1. Die Unteransprüche betreffen besonders zweckmäßige Weiterbildungen der Erfindung.

Erfindungsgemäß ist also eine Massageeinheit für ein Sitzteil und/oder ein Lehnenteil eines Sitzes, insbesondere eines Kraftfahrzeugsitzes vorgesehen, bei welcher eine Drehachse eines Rotors des Elektromotors und eine Translationsachse des Massagekopfes parallel zueinander angeordnet sind. Der Elektromotor ist mit einer Energieversorgung und Steuereinheit verbunden und kann in zwei entgegengesetzten Drehrichtungen betrieben werden. Bei einer ersten Drehrichtung des Rotors wird der Massagekopf translatorisch von einer eingefahrenen Nichtgebrauchsstellung in eine ausgefahrene Gebrauchsstellung verlagert. Durch eine entsprechende Ansteuerung des Elektromotors kann der Rotor mit einer entgegengesetzten Drehrichtung bewegt werden. Da im Vergleich zu dem eingangs genannten Stand der Technik bei der erfindungsgemäßen Ausgestaltung keine 90°-Umlenkung der Drehbewegung des Elektromotors erforderlich ist, werden im Vergleich zum eingangs genannten Stand der Technik insgesamt weniger Bauteile und weniger Verzahnungen benötigt. Hieraus resultiert eine Gewichtsreduzierung jeder einzelnen Massageeinheit, was bei durchschnittlich 20 bis 30 Massageeinheiten pro Sitz eine erhebliche Verbesserung des Leichtbaupotentials ermöglicht. Weiterhin wird der Zusammenbau der Massageeinheit selbst durch die nicht erforderliche Umlenkung wesentlich vereinfacht. Es wird eine prozesssichere, einfache und kompakt aufgebaute Massageeinheit für ein Sitz- oder Lehnenteil eines Sitzes zur Verfügung gestellt. Außerdem werden durch den ersatzlosen Verzicht auf den im Stand der Technik genutzten Schneckentrieb die Reibungsverluste bei der Übertragung der Drehbewegung des Elektromotors reduziert. Weiterhin wird durch die Erfindung die Drehbewegung des Elektromotors besonders schnell in eine translatorische Massagebewegung des Massagekopfes umgewandelt.

Dabei hat es sich als besonders vorteilhaft erwiesen, dass die Translationsachse des Massagekopfes und die Drehachse des Rotors koaxial angeordnet sind. Hierdurch wird die Drehbewegung des Rotors ohne Versatz und ohne nennenswerte Querkräfte in eine translatorische Bewegung des Massagekopfes umgewandelt.

In diesem Fall erweist es sich als besonders zweckmäßig, zwischen dem Elektromotor und dem Massagekopf einen Spindeltrieb vorzusehen, welcher aus einer von dem Elektromotor antreibbaren und drehbeweglichen Gewindespindel und einer auf der Gewindespindel angeordneten drehfesten Spindelmutter besteht, wobei die Spindelmutter an dem Massagekopf fixiert ist. Hierdurch wird die Prozesssicherheit optimiert und die Reibungsverluste bei der Übertragung der Drehbewegung bzw. der Umwandlung in eine translatorische Bewegung des Massagekopfes werden minimiert.

Besonders zweckmäßig ist hierbei, dass der Massagekopf in einem dem Elektromotor zugewandten Endabschnitt eine Aussparung aufweist, welche zur Aufnahme eines Teilabschnittes der Gewindespindel ausgebildet und in welcher die Spindelmutter fixiert ist. Durch die hülsenförmige Ausbildung des Massagekopfes wird einerseits das Gewicht der Massageeinheit reduziert und andererseits können die Gewindespindel sowie die Spindelmutter im Inneren des Massagekopfes angeordnet werden. Dadurch ist die Verzahnung zwischen der Gewindespindel und der Spindelmutter vor Staubpartikeln oder anderen Störeinflüssen geschützt und die Prozesssicherheit wird verbessert.

Weiterhin erweist es sich als besonders vorteilhaft, dass ein Gehäuse vorgesehen ist, welches einen den Elektromotor zumindest abschnittsweise umschließenden Basisabschnitt und einen den Massagekopf zumindest abschnittsweise umschließenden und sich in Richtung der Translationsachse erstreckenden Führungsabschnitt aufweist. Dabei ist der Führungsabschnitt als Linearführung ausgebildet, wobei auf die Drehlager, wie sie beim eingangs genannten Stand der Technik zur Lagerung des drehbaren Schneckenrades im Gehäuse erforderlich sind, verzichtet werden kann. Der Basisabschnitt kann außerdem einen Befestigungsabschnitt zur Fixierung der Massageeinheit am Sitzteil oder am Lehnenteil aufweisen.

Eine alternative Ausführungsform der vorliegenden Erfindung sieht vor, dass der Rotor in axialer Richtung relativ zum Stator beweglich gelagert ist, wobei der Rotor bei spannungslosem Elektromotor in einer ausgefahrenen Stellung und bei anliegender Spannung in einer eingefahrenen Stellung angeordnet ist. Durch die Beaufschlagung des Elektromotors mit einer Spannung entsteht ein elektromagnetisches Feld, welches den in der ausgefahrenen Stellung angeordneten Rotor in die eingefahrene Stellung bewegt. Hierdurch führt auch der mit dem Rotor über die Gewindespindel gekoppelte Massagekopf eine Translationsbewegung in Richtung des Sitzbenutzers aus. Wenn die Spannung anschließend auf den Wert Null reduziert wird, der Elektromotor also spannungslos ist, existiert auch kein elektromagnetisches Feld mehr und der Rotor wird wieder in der ausgefahrenen Stellung angeordnet.

Hierbei erweist es sich als besonders praktikabel, dass der Rotor bei spannungslosem Elektromotor durch eine parallel zur Rotationsachse gerichtete Kraft F in der ausgefahrenen Stellung anordbar ist und bei einer anliegenden Spannung durch ein elektromagnetisches Feld entgegen der Kraft F in die eingefahrene Stellung verfahrbar ist. Hierdurch wird gewährleistet, dass der Rotor beim Ein- bzw. Ausschalten der Spannung bzw. des elektromagnetischen Feldes in der jeweiligen Stellung angeordnet wird.

Eine besonders einfache Ausgestaltung sieht vor, dass die Kraft F durch eine zwischen dem Rotor und einer Anlagefläche des Gehäuses angeordnete Feder erzeugbar ist. Dabei ist die Feder entspannt, wenn der Rotor in der ausgefahrenen Stellung angeordnet ist. Nach der Erzeugung eines elektromagnetischen Feldes wird dann die Feder durch den sich in die eingefahrene Stellung bewegenden Rotor zusammengedrückt. Wenn der Elektromotor wieder spannungslos geschaltet wird, entspannt sich die Feder und der Rotor wird selbsttätig in die ausgefahrene Stellung überführt.

Eine andere Ausgestaltung der vorliegende Erfindung sieht vor, dass der Elektromotor wechselweise mit einer ersten Spannung und einer zweiten Spannung beaufschlagbar ist und dass der ersten Spannung eine erste Drehrichtung und der zweiten Spannung eine entgegengesetzte zweite Drehrichtung des Rotors zugeordnet ist. Bei einer entsprechenden Ansteuerung des Elektromotors kann mittels der Massageeinheit wahlweise eine Druckpunktmassage oder eine Vibrationsmassage ausgeführt werden.

Bei der genannten alternativen Ausführungsform der Massageeinheit, welche einen beweglich gelagerten Rotor aufweist, wird die Vibrationsmassage dadurch ermöglicht, dass der Elektromotor beim Anliegen der ersten Spannung spannungslos ist und beim Anliegen der zweiten Spannung ein elektromagnetisches Feld erzeugbar wird. Bei einer entsprechenden Ansteuerung des Elektromotors wird also ein magnetisches Feld wechselweise ein- und ausgeschaltet, sodass der mit dem Rotor über die Gewindespindel gekoppelte Massagekopf eine Vibrationsbewegung in Richtung der Translationsachse ausführt.

Hierbei ist vorgesehen, dass ein Wechselintervall zwischen der ersten Spannung und der zweiten Spannung bei einer Druckpunktmassage zwischen 1 und 10 Sekunden und bei einer Vibrationsmassage zwischen 0,1 und 0,3 Sekunden einstellbar ist. Bei der Druckpunktmassage ergibt sich eine 1 bis 10 Sekunden anhaltende anregende Druckeinwirkung auf die Muskeln und Gelenke des Sitzbenutzers. Dagegen werden bei der Vibrationsmassage durch den sich in einer höheren Frequenz bewegenden Massagekopf die Durchblutung der Muskulatur verbessert, Verspannungen gelöst und Schlackenstoffe abtransportiert.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: eine zumindest teilweise geschnittene schematische Seitenansicht eines ein Sitzteil und ein Lehnenteil aufweisenden Sitzes mit mehreren Massageeinheiten;
- Fig. 2: eine Ansicht gemäß Einzelheit X aus Figur 1 mit einer Massageeinheit in einer eingefahrenen Nichtgebrauchsstellung in einer vergrößerten Darstellung;
- Fig. 3: die in Figur 2 dargestellte Massageeinheit ohne das Sitzteil;
- Fig. 4: die in Figur 3 dargestellte Massageeinheit in einer ausgefahrenen Gebrauchsstellung;
- Fig. 5: eine Darstellung der Massageeinheit während der Durchführung einer Vibrationsmassage;
- Fig. 6: ein Spannungs-Zeit-Diagramm zur Ansteuerung des Elektromotors zur Durchführung einer Vibrationsmassage;
- Fig. 7: eine alternative Ausführungsform einer Massageeinheit mit einem relativ zum Stator beweglich gelagerten Rotor bei spannungslosem Elektromotor;
- Fig. 8: die in Figur 7 dargestellte Massageeinheit, während der Elektromotor mit einer Spannung versorgt wird;
- Fig. 9: ein Spannungs-Zeit-Diagramm zur Ansteuerung des Elektromotors zur Durchführung einer Vibrationsmassage mit einer in den Figuren 7 und 8 dargestellten Massageeinheit.

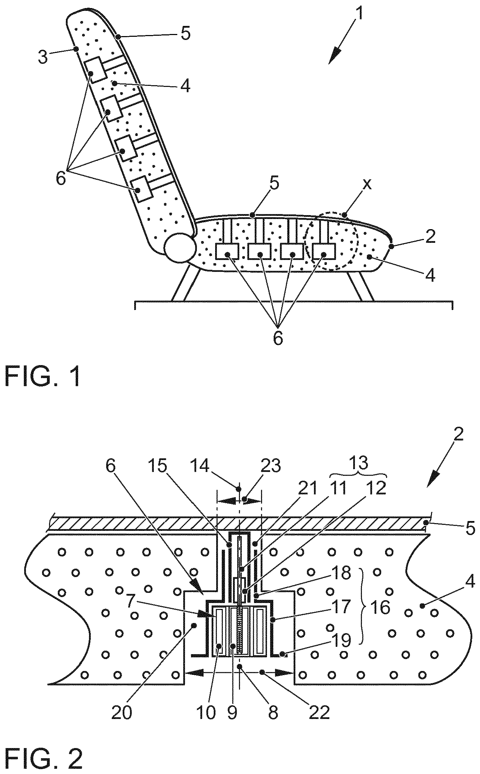

Figur 1 zeigt eine schematische Darstellung eines als Kraftfahrzeugsitz ausgebildeten Sitzes 1, welcher aus einem Sitzteil 2 und einem Lehnenteil 3 besteht. Das Sitzteil 2 und das Lehnenteil 3 umfassen jeweils ein Schaumelement 4 und einen Sitzbezug 5. Zwischen dem Schaumelement 4 und dem Sitzbezug 5 sind weitere Schichten, wie beispielsweise eine Lastverteilschicht oder eine Zwischenschicht vorgesehen, welche in den Figuren jedoch nicht dargestellt sind. In dem Sitzteil 2 und dem Lehnenteil 3 des Sitzes 1 sind jeweils mehrere Massageeinheiten 6 zur Durchführung einer Massagebewegung in Richtung eines nicht dargestellten Sitzbenutzers angeordnet.

Eine vergrößerte Darstellung der Einzelheit X aus Figur 1 ist in Figur 2 abgebildet. Die Massageeinheit 6 besteht aus einem Elektromotor 7, welcher einen um eine Drehachse 8 drehbaren Rotor 9 und einen den Rotor 9 umschließenden Stator 10 umfasst. Der Elektromotor 7 ist über einen aus einer Gewindespindel 11 und einer Spindelmutter 12 bestehenden Spindeltrieb 13 mit einem in Richtung einer Translationsachse 14 translatorisch verfahrbaren Massagekopf 15 gekoppelt. Dabei ist die Translationsachse 14 parallel bzw. koaxial zu der Drehachse 8 des Rotors 9 angeordnet. Die Massageeinheit 6 umfasst weiterhin ein Gehäuse 16 bestehend aus einem den Elektromotor 7 aufnehmenden Basisabschnitt 17, einen den Massagekopf 15 zumindest teilweise umschließenden und sich in Richtung der Translationsachse 14 des Massagekopfes 15 erstreckenden Führungsabschnitt 18 sowie einen Befestigungsabschnitt 19 zur Fixierung der Massageeinheit 6 am Sitzteil 2 oder am Lehnenteil 3.

Weiterhin ist aus Figur 2 ersichtlich, dass die Massageeinheit 6 als Baueinheit in einer größenangepassten Ausnehmung 20 des Schaumelementes 4 angeordnet und fixiert ist. Im Schaumelement 4 ist eine Durchbrechung 21 zur Aufnahme bzw. Anordnung des Massagekopfes 15 bzw. des Führungsabschnittes 18 des Gehäuses 16 vorgesehen. Hierbei ist ein Durchmesser 22 der Ausnehmung 20 wesentlich größer als ein Durchmesser 23 der Durchbrechung 21, vorzugsweise doppelt so groß. Die Montage der Massageeinheit 6 in der Ausnehmung 20 erfolgt vorzugsweise von einer dem Sitzbezug 5 abgewandten Seite des Sitzteiles 2 bzw. des Lehnenteiles 3. Hierdurch wird sowohl die Montage als auch die Demontage einer Massageeinheit 6 in einem Reparaturfall wesentlich vereinfacht, da der Sitzbezug 5 hierzu nicht von dem Schaumteil 4 entfernt sein bzw. werden muss.

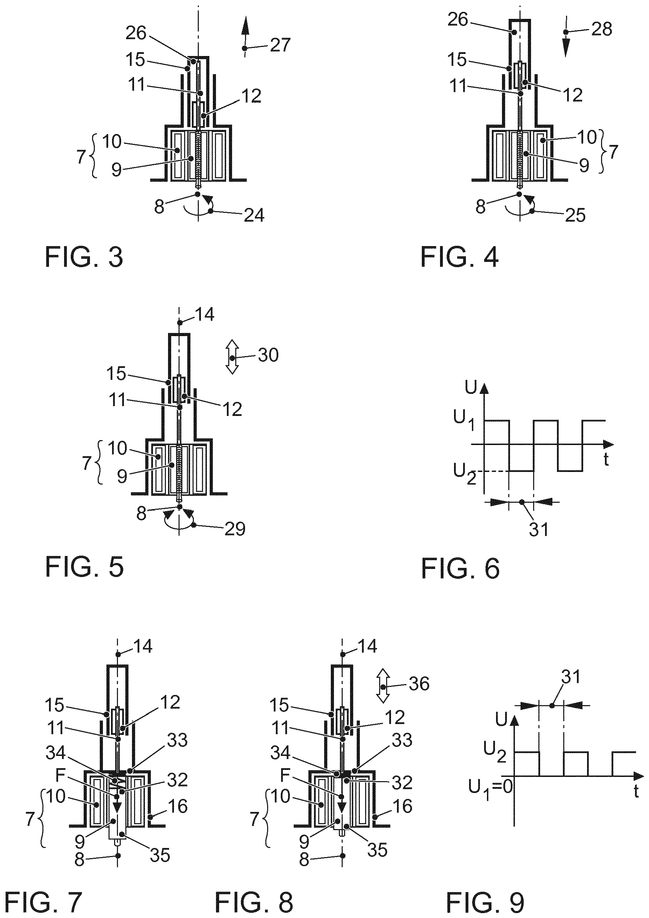

Anhand der Figuren 3 und 4 wird nachfolgend beschrieben, wie der Massagekopf 15 für eine Massagebewegung von der in Figuren 2 und 3 dargestellten Nichtgebrauchsstellung in eine in Figur 4 dargestellte Gebrauchsstellung verlagert wird. Der aus dem Stator 10 und dem Rotor 9 bestehende Elektromotor 7 ist mit einer nicht dargestellten Steuereinheit und einer Energieversorgung verbunden. Je nach Signal der Steuereinheit liegt entweder einer erste Spannung U₁ oder eine zweite Spannung U₂ an dem Elektromotor 7 an (vgl. Figur 6), wobei die erste Spannung U₁ den Rotor 9 in einer ersten Drehrichtung 24 (Figur 3) um die Drehachse 8 und die zweite Spannung U₂ den Rotor 9 in einer entgegengesetzten zweiten Drehrichtung 25 (Figur 4) antreibt.

Beim Anliegen der ersten Spannung U₁ am Elektromotor 7 bewegt sich der Rotor 9 und dadurch auch die mit dem Rotor 9 verbundene Gewindespindel 11 um die Drehachse 8 in der in Figur 3 dargestellten ersten Drehrichtung 24. In der gezeigten Nichtgebrauchsstellung des Massagekopfes 15 ist ein Teilabschnitt der Gewindespindel 11 in einer in Richtung des Elektromotors 7 offenen Aussparung 26 des Massagekopfes 15 angeordnet. In dieser Aussparung 26 ist auch die Spindelmutter 12 drehfest fixiert. Infolge der Drehbewegung der Gewindespindel 11 bewegt sich die auf der Gewindespindel 11 angeordnete Spindelmutter 12 zusammen mit dem Massagekopf 15 nach oben (Richtungspfeil 27) bzw. von dem Elektromotor 7 weg, und zwar bis der Massagekopf 15 die in Figur 4 dargestellte ausgefahrene Gebrauchsstellung erreicht hat.

Wenn nachfolgend der Elektromotor 7 mit der zweiten Spannung U₂ beaufschlagt wird, bewegen sich der Rotor 9 und die Gewindespindel 11 um die Drehachse 8 in der in Figur 4 dargestellten zweiten Drehrichtung 25. Infolge dieser Drehbewegung der Gewindespindel 11 bewegt sich die auf der Gewindespindel 11 angeordnete Spindelmutter 12 zusammen mit dem Massagekopf 15 nach unten (Richtungspfeil 28) bzw. zum Elektromotor 7 hin, und zwar bis der Massagekopf 15 wieder die in Figur 3 dargestellte eingefahrene Nichtgebrauchsstellung erreicht hat.

Zur Durchführung einer Druckpunktmassage wird der Elektromotor 7 durch die Steuereinheit bzw. die Energieversorgung mit einer ersten (positiven) Spannung U₁ beaufschlagt, sodass der Massagekopf 15 von der Nichtgebrauchsstellung (Figur 3) in die Gebrauchsstellung (Figur 4) verfahren wird. Der Massagekopf 15 verbleibt für einen vorbestimmten, programmierten oder frei wählbaren Zeitraum in dieser Gebrauchsstellung und übt einen definierten Druck auf die Muskeln und Gelenke des Sitzbenutzers aus. Anschließend wird der Elektromotor 7 durch die Steuereinheit bzw. die Energieversorgung mit einer zweiten (negativen) Spannung U₂ beaufschlagt, sodass sich die Drehrichtung 24, 25 des Elektromotors 7 bzw. des Rotors 9 umkehrt und der Massagekopf 15 von der Gebrauchsstellung zurück in die Nichtgebrauchsstellung verfahren wird.

Zur Durchführung einer Vibrationsmassage wird der Massagekopf 15 zunächst wie bereits beschrieben in die in Figur 5 dargestellte Gebrauchsstellung verfahren. Anschließend wird der Elektromotor 7 durch die Steuereinheit wechselweise in kurzen Zeitabständen mit einer ersten Spannung U₁ und einer zweiten Spannung U₂ beaufschlagt, sodass der Rotor 9 wechselweise in einer ersten Drehrichtung 24 und einer zweiten Drehrichtung 25 angetrieben wird (Doppelpfeil 29). Hierdurch führt der Massagekopf 15 eine in Figur 5 durch einen Doppelpfeil 30 dargestellte Vibrationsbewegung in Richtung der Translationsachse 14 aus. Ein Wechselintervall 31 (Figur 6) zwischen einem Umschalten von der ersten Spannung U₁ auf die zweite Spannung U₂ bzw. von der zweiten Spannung U₂ auf die erste Spannung U₁ kann voreingestellt oder frei wählbar sein und beträgt vorzugsweise zwischen 0,1 und 0,3 Sekunden. Figur 6 zeigt das Rechtecksignal zur Ansteuerung des Elektromotors 7 mit den wechselnden Spannungen U₁ und U₂ in einem vorbestimmten Wechselintervall 31.

Die Figuren 7 und 8 zeigen eine alternative Ausführungsform einer Massageeinheit 6 für ein Sitzteil 2 oder ein Lehnenteil 3, insbesondere zur Durchführung einer Vibrationsmassage. Hierbei ist der Rotor 9 in Richtung der Drehachse 8 und relativ zu dem Stator 10 beweglich ausgebildet. Zwischen einer dem Massagekopf 15 zugewandten Stirnseite 32 des Rotors 9 und einer Anlagefläche 33 des Gehäuses 16 ist eine Feder 34 vorgesehen. Bei einer entspannten Feder 34 und einem spannungslosen Elektromotor 7 (U₁=0) ist der Rotor 9 zumindest mit einem der Feder 34 abgewandten Endabschnitt 35 außerhalb des Stators 10 angeordnet (Figur 7). Durch Anlegen einer Spannung U₂ wird ein elektromagnetisches Feld erzeugt, welches den Rotor 9 bzw. den aus dem Stator 10 herausragenden Endabschnitt 35 des Rotors 9 entgegen einer Kraft F der Feder 34 in eine in den Stator 10 eingefahrene Stellung zieht (Figur 8). Wenn das elektrische Feld anschließend wieder durch Anlegen der Spannung U₁ angeschaltet wird, entspannt sich die komprimierte Feder 34 und der Rotor 9 wird wieder in seine zumindest teilweise aus dem Stator 10 hervorstehende und in Figur 7 dargestellte Lage verfahren. Durch ein wechselweises Anschalten (Spannung U₂) und Abschalten (Spannung U₁) des Elektromotors 7 wird auch das elektromagnetische Feld ein- und abgeschaltet und der mit dem Rotor 9 über die Gewindespindel 11 verbundene Massagekopf 15 führt eine Vibrationsbewegung (Doppelpfeil 36) in Richtung der Translationsachse 14 aus. Hierbei wird die Vibrationsbewegung des Massagekopfes 15 ausschließlich durch die axiale Bewegung des Rotors 9 relativ zum Stator 10 erzeugt. Figur 9 zeigt das Rechtecksignal zur Ansteuerung des Elektromotors 5 in dem vorbestimmten Wechselintervall 31.

### Bezugszeichenliste

- 1: Sitz
- 2: Sitzteil
- 3: Lehnenteil
- 4: Schaumelement
- 5: Sitzbezug

- 6: Massageeinheit
- 7: Elektromotor
- 8: Drehachse
- 9: Rotor
- 10: Stator

- 11: Gewindespindel
- 12: Spindelmutter
- 13: Spindeltrieb
- 14: Translationsachse
- 15: Massagekopf

- 16: Gehäuse
- 17: Basisabschnitt
- 18: Führungsabschnitt
- 19: Befestigungsabschnitt
- 20: Ausnehmung

- 21: Durchbrechung
- 22: Durchmesser
- 23: Durchmesser
- 24: Drehrichtung
- 25: Drehrichtung
- 26: Aussparung
- 27: Richtungspfeil
- 28: Richtungspfeil
- 29: Doppelpfeil
- 30: Doppelpfeil

- 31: Wechselintervall
- 32: Stirnseite
- 33: Anlagefläche
- 34: Feder
- 35: Endabschnitt

- 36: Doppelpfeil

## Patentansprüche

1. Massageeinheit (6) für ein Sitzteil (2) und/oder ein Lehnenteil (3) eines Sitzes (1) bestehend aus einem steuerbaren Elektromotor (7) und aus einem durch den Elektromotor (7) antreibbaren und zur Durchführung einer Massagebewegung in Richtung eines Sitzbenutzers translatorisch verfahrbaren Massagekopf (15), **dadurch gekennzeichnet, dass** eine Drehachse (8) eines Rotors (9) des Elektromotors (7) und eine Translationsachse (14) des Massagekopfes (15) parallel zueinander angeordnet sind.

2. Massageeinheit (6) nach Anspruch 1, **dadurch gekennzeichnet, dass** die Translationsachse (14) des Massagekopfes (15) und die Drehachse (8) des Rotors (9) koaxial angeordnet sind.

3. Massageeinheit (6) nach den Ansprüchen 1 oder 2, **dadurch gekennzeichnet, dass** zwischen dem Elektromotor (7) und dem Massagekopf (15) ein Spindeltrieb (13) vorgesehen ist, welcher aus einer von dem Elektromotor (7) antreibbaren und drehbeweglichen Gewindespindel (11) und einer auf der Gewindespindel (11) angeordneten drehfesten Spindelmutter (12) besteht, wobei die Spindelmutter (12) an dem Massagekopf (15) fixiert ist.

4. Massageeinheit (6) nach zumindest einem der vorangehenden Ansprüche, **dadurch gekennzeichnet, dass** der Massagekopf (15) in einem dem Elektromotor (7) zugewandten Endabschnitt eine Aussparung (26) aufweist, welche zur Aufnahme eines Teilabschnittes der Gewindespindel (11) ausgebildet und in welcher die Spindelmutter (12) drehfest fixiert ist.

5. Massageeinheit (6) nach zumindest einem der vorangehenden Ansprüche, **dadurch gekennzeichnet, dass** ein Gehäuse (16) vorgesehen ist, welches einen den Elektromotor (7) zumindest abschnittsweis umschließenden Basisabschnitt (17) und einen den Massagekopf (15) zumindest abschnittsweise umschließenden und sich in Richtung der Translationsachse (14) des Massagekopfes (15) erstreckenden Führungsabschnitt (18) aufweist.

6. Massageeinheit (6) nach zumindest einem der vorangehenden Ansprüche, **dadurch gekennzeichnet, dass** der Rotor (9) in axialer Richtung relativ zum Stator (10) beweglich gelagert ist, wobei der Rotor (9) bei spannungslosem Elektromotor (7) in einer ausgefahrenen Stellung und bei anliegender Spannung in einer eingefahrenen Stellung angeordnet ist.

7. Massageeinheit (6) nach zumindest einem der vorangehenden Ansprüche, **dadurch gekennzeichnet, dass** der Rotor (9) bei spannungslosem Elektromotor (7) durch eine parallel zur Drehachse (8) gerichtete Kraft F in der ausgefahrenen Stellung anordbar ist und bei einer anliegenden Spannung durch ein elektromagnetisches Feld entgegen der Kraft F in die eingefahrene Stellung verfahrbar ist.

8. Massageeinheit (6) nach zumindest einem der vorangehenden Ansprüche, **dadurch gekennzeichnet, dass** die Kraft F durch eine zwischen dem Rotor (9) und einer Anlagefläche (33) des Gehäuses (16) angeordnete Feder (34) erzeugbar ist.

9. Massageeinheit (6) nach zumindest einem der vorangehenden Ansprüche, **dadurch gekennzeichnet, dass** der Elektromotor (7) wechselweise mit einer ersten Spannung (U₁) und einer zweiten Spannung (U₂) beaufschlagbar ist, und dass
• der ersten Spannung (U₁) eine erste Drehrichtung (24) und der zweiten Spannung (U₂) eine entgegengesetzten zweite Drehrichtung (25) des Rotors (9) zugeordnet ist oder
• dass der Elektromotor (7) bei Beaufschlagung mit der ersten Spannung (U₁=O) spannungslos ist und bei Beaufschlagung mit der zweiten Spannung (U₂) ein elektromagnetisches Feld erzeugbar ist.

10. Massageeinheit (6) nach zumindest einem der vorhergehenden Ansprüche, **dadurch gekennzeichnet, dass** ein Wechselintervall (31) zwischen der ersten Spannung (U₁) und der zweiten Spannung (U₂) bei einer Druckpunktmassage zwischen 1 und 10 Sekunden und bei einer Vibrationsmassage zwischen 0,1 und 0,3 Sekunden einstellbar ist.

## Claims

1. A massage unit (6) for a seat part (2) and/or a backrest part (3) of a seat (1) consisting of a controllable electric motor (7) and a massage head (15) startable by the electric motor (7) and displaceable in a translatory manner for carrying out a massage movement towards a user of the seat, **characterised in that** an axis of rotation (8) of a rotor (9) of the electric motor (7) and a translation axis (14) of the massage head (15) are arranged parallel to one another.

2. The massage unit (6) according to claim 1, **characterised in that** the translation axis (14) of the massage head (15) and the axis of rotation (8) of the rotor (9) are arranged coaxially.

3. The massage unit (6) according to claims 1 or 2, **characterised in that** provided between the electric motor (7) and the massage head (15) is a spindle drive (13), which consists of a rotatable threaded spindle (11) startable by the electric motor (7) and a spindle nut (12) arranged on the rotationally-fixed threaded spindle (11), wherein the spindle nut (12) is attached to the massage head (15).

4. The massage unit (6) according to at least one of the preceding claims, **characterised in that** the massage head (15) has in an end section facing the electric motor (7) a recess (26), which is formed to receive a partial section of the threaded spindle (11) and in which the spindle nut (12) is attached in a rotationally-fixed manner.

5. The massage unit (6) according to at least one of the preceding claims, **characterised in that** a housing (16) is provided which has a base section (17) enclosing the electric motor (7) at least in sections, and a guide section (18) enclosing the massage head (15) at least in sections and extending towards the translation axis (14) of the massage head (15).

6. The massage unit (6) according to at least one of the preceding claims, **characterised in that** the rotor (9) is movably mounted in axial direction relative to the stator (10), wherein the rotor (9) is arranged in an extended position when the electric motor (7) is not energized, and in a retracted position when voltage is applied.

7. The massage unit (6) according to at least one of the preceding claims, **characterised in that** the rotor (9) can be arranged in the extended position by a force F applied parallel to the axis of rotation (8) when the electric motor (7) is not energized, and can be displaced into the retracted position by an electromagnetic field against the force F when voltage is applied.

8. The massage unit (6) according to at least one of the preceding claims, **characterised in that** the force F can be generated by a spring (34) arranged between the rotor (9) and a contact surface (33) of the housing (16).

9. The massage unit (6) according to at least one of the preceding claims, **characterised in that** a first voltage (U₁) and a second voltage (U₂) can be applied alternately to the electric motor (7), and **in that**
• a first direction of rotation (24) is assigned to the first voltage (U₁) and an opposite second direction of rotation (25) of the rotor (9) to the second voltage (U₂), or
• **in that** the electric motor (7) is not energized when the first voltage (U₁=0) is applied, and an electromagnetic field can be generated when the second voltage (U₂) is applied.

10. The massage unit (6) according to at least one of the preceding claims, **characterised in that** a change interval (31) can be adjusted between the first voltage (U₁) and the second voltage (U₂) for a pressure point massage between 1 and 10 seconds and for a vibration massage between 0.1 and 0.3 seconds.

## Revendications

1. Unité de massage (6) pour une partie d'assise (2) et/ou une partie de dossier (3) d'un siège (1) consistant en un moteur électrique contrôlable (7) et en une tête de massage (15) qui peut être entraînée par le moteur électrique (7) et qui peut être déplacée en translation pour la réalisation d'un mouvement de massage dans la direction d'un utilisateur du siège, **caractérisée en ce qu'**un axe de rotation (8) d'un rotor (9) du moteur électrique (7) et un axe de translation (14) de la tête de massage (15) sont agencés parallèlement l'un par rapport à l'autre.

2. Unité de massage (6) selon la revendication 1, **caractérisée en ce que** l'axe de translation (14) de la tête de massage (15) et l'axe de rotation (8) du rotor (9) sont agencés de manière coaxiale.

3. Unité de massage (6) selon les revendications 1 ou 2, **caractérisée en ce qu'**entre le moteur électrique (7) et la tête de massage (15) il est prévu un entraînement de la broche (13), qui consiste en une broche filetée (11) qui peut être entraînée et déplacée de façon rotative par le moteur électrique (7) et en un écrou de broche solidaire en rotation (12) agencé sur la broche filetée (11), l'écrou de broche (12) étant fixé à la tête de massage (15).

4. Unité de massage (6) selon au moins l'une des revendications précédentes, **caractérisée en ce que** la tête de massage (15) comporte une cavité (26) dans une partie terminale tournée vers le moteur électrique (7), qui est conçue pour accueillir une partie terminale de la broche filetée (11) et dans laquelle l'écrou de broche (12) est fixé de manière solidaire en rotation.

5. Unité de massage (6) selon au moins l'une des revendications précédentes, **caractérisée en ce qu'**il est prévu un boîtier (16), qui comporte une partie de base (17) entourant au moins à sections le moteur électrique (7) et une partie de guidage (18) entourant au moins à section la tête de massage (15) et s'étendant dans la direction de l'axe de translation (14) de la tête de massage (15).

6. Unité de massage (6) selon au moins l'une des revendications précédentes, **caractérisée en ce que** le rotor (9) est monté de façon mobile dans la direction axiale par rapport au stator (10), le rotor (9) étant agencé dans une position déployée quand le moteur électrique est hors tension (7) et dans une position rétractée quand la tension est présente.

7. Unité de massage (6) selon au moins l'une des revendications précédentes, **caractérisée en ce que** le rotor (9) peut être agencé dans la position déployée par une force F dirigée parallèlement à l'axe de rotation (8) quand le moteur électrique (7) est hors tension et **en ce qu'**il peut être déplacé dans la position rétractée par un champ électromagnétique contre la force F quand la tension est présente.

8. Unité de massage (6) selon au moins l'une des revendications précédentes, **caractérisée en ce que** la force F peut être générée par un ressort (34) agencé entre le rotor (9) et une surface de contact (33) du boîtier (16).

9. Unité de massage (6) selon au moins l'une des revendications précédentes, **caractérisée en ce que** le moteur électrique (7) peut être alimenté en alternance avec une première tension (U₁) et avec une deuxième tension (U₂), et **en ce que**
• un premier sens de rotation (24) est attribué à la première tension (U₁) et un deuxième sens de rotation opposé (25) du rotor (9) est attribué à la deuxième tension (U₂) ou
• **en ce que** le moteur électrique (7) est hors tension lors de l'alimentation avec la première tension (U₁=0) et **en ce qu'**un champ électromagnétique peut être généré lors de l'alimentation avec la deuxième tension (U₂).

10. Unité de massage (6) selon au moins l'une des revendications précédentes, **caractérisée en ce qu'**un intervalle de changement (31) entre la première tension (U₁) et la deuxième tension (U₂) peut être réglé entre 1 et 10 secondes lors d'un massage avec des points de pression et entre 0,1 et 0,3 secondes lors d'un massage de vibration.
